# EUROPEAN PATENT APPLICATION

(11) **EP 2 706 341 A2**
(43) Date of publication of application: **12.03.2014**
(21) Application number: 13183440.0
(22) Date of filing: 06.09.2013
(51) Int. Cl.: G01M 99/00

(54) **Performance testing of animal slaughtering device**

(30) Priority: 07.09.2012 GB 201216013
(71) Applicant: Accles & Shelvoke Limited, Sutton Coldfield West Midlands B76 1BA (GB)
(72) Inventor: Newton, Reeve John William, Birmingham, West Midlands B23 7YS (GB); Ross, Matthew Harry, Greenville, PA 6125 (US)
(74) Representative: Wightman, David Alexander

(57) **Abstract**

A method of and apparatus for testing the performance of a tool (13) for use in the humane slaughtering of animals wherein a bolt accommodated within and coaxially of a barrel of the tool (13) is adapted to be driven lengthwise of the barrel by a force applied thereto. The method and apparatus includes mounting the tool (13) on a test rig (1), firing the tool (13), detecting the time for the captive bolt to travel a pre-determined distance by means of a sensor unit (16), applying a calibration factor to the detected time to compensate for time delays and determining the actual time to travel the predetermined distance, and generating a signal representative of the condition of the tool (13) based on the actual time.

## Description

This invention concerns improvements in or relating to devices for use in the humane slaughtering of animals. More specifically the invention concerns devices, namely humane slaughter tools, of the captive bolt type which are used to stun animals prior to slaughtering by cutting the jugular vein. In the known devices the bolt is accommodated within and coaxially of the barrel of the device and is adapted to be driven lengthwise of the barrel by a force applied thereto. Such devices will hereinafter be referred to as devices of the kind set forth.

It is important that the devices are maintained in good working order so that the bolt is driven with sufficient force to effectively stun the animal. In one type of device the bolt is driven lengthwise of the barrel by an explosive force when a blank cartridge is fired in a breach block of the device. The effective power developed by the bolt before it stuns the animal is determined by the explosive force applied to the bolt and the distance travelled when the bolt contacts the animal, more especially the distance the bolt projects from the barrel, and the power can be adjusted for varying classes of animals to be slaughtered by altering the explosive force and/or the distance travelled. Repetitive use of such devices over a period of time can result in wear of various parts resulting in a loss of performance of the device which may eventually result in the force applied to the animal being insufficient to effectively stun the animal which can cause the animal to suffer unnecessarily. Other types of devices may employ gas pressure or even spring force to drive the bolt and these can also suffer from loss of performance over time due to wear of working components of the device.

The present invention has been made from a consideration of the foregoing. More especially, the present invention seeks to provide a method of and apparatus for testing devices of the kind set forth to check that the performance meets the operating requirements. Thus, it is a desired aim of the present invention to provide a method of and apparatus for testing devices of the kind set forth that provides the user with information whereby the performance of the device can be monitored and remedial action can be taken to correct the cause of any loss of performance before the performance is such that the device no longer functions in a satisfactory manner.

An exemplary embodiment of the disclosure provides a method of testing the performance of a device of the kind set forth includes providing a test rig, mounting the device on the test rig, firing the device, detecting the time for a captive bolt of the device to travel a pre-determined distance, applying a calibration factor to the detected time to compensate for time delays and determine the actual time to travel the pre-determined distance, and generating a signal representative of the condition of the device based on the actual time.

The detected time may be determined by starting and stopping a timer in response to sensors spaced apart in the direction of travel of the bolt for detecting movement of the bolt. Any suitable sensors may be employed, for example magnetic sensors. The signal may be a visual and/or audible signal for indicating a pass or fail condition of the device.

Another exemplary embodiment of the disclosure provides a method of testing the performance of a device of the kind set forth includes providing a test rig, mounting the device on the test rig, firing the device, generating information representative of the condition of the device based thereon, storing the information, repeating the steps of mounting and firing the device over a period of time and storing the information representative of the condition of the device for each firing, and monitoring a change in performance of the device by comparing the information from different firings for determining when remedial action is required.

The information may be stored on the test rig. More preferably, the information is stored on a data collection unit separate from the test rig. Any suitable method of transferring the information from the test rig to the data collection unit may be employed including (but not limited to a wire link, a wireless link or a memory stick. The data collection unit may provide a visual and/or audible indication of the condition of the device after each firing. The data collection unit may store information relating to information on each firing of the device and may be configured so that the stored information can be downloaded to a data handling unit such as a computer provided with appropriate software for comparing the information from each firing whereby a change in performance can be monitored. For example, the data handling unit may generate a chart or graph comparing the performance for a number of test firings. Alternatively, the data collection unit and data handling unit may be combined in a single device. Any suitable method of transferring the information from the data collection unit to the data handling unit may be employed including (but not limited to a wire link, a wireless link or a memory stick.

The data collection unit may be adapted to provide remote communication with a service office via a suitable link. In this way the results of test firings may be remotely monitored whereby any changes in performance of a tool indicating a spares requirement, servicing needs, wear rates etc. can be detected and appropriate action taken before performance of the tool is significantly affected. For example, a global system for mobile communication (GSM) connection to a central service computer equipped with a GSM modem and service software may be employed so that all the data can be collected for processing and/or distribution as required. Alternatively, a general packet radio service (GPRS) connection with an internet web server may be employed so that all the data can be collected and stored on the web server for remote access from the web server from any location for processing and/or distribution as required.

Another exemplary embodiment of the disclosure provides apparatus for testing the performance of a device of the kind set forth includes a test rig for detecting the time for a captive bolt of the device to travel a pre-determined distance when the device is connected to the test rig and fired, and a data collection unit for determining the condition of the device based on the actual time to travel the pre-determined distance from the detected time corrected by a calibration factor to compensate for time delays providing an indication of the condition of the device.

The detected time may be determined by starting and stopping a timer in response to sensors spaced apart in the direction of travel of the bolt for detecting movement of the bolt. Any suitable sensors may be employed, for example magnetic sensors. A visual and/or audible indication of the condition of the device may be provided.

Another exemplary embodiment of the disclosure provides apparatus for testing the performance of a device of the kind set forth includes a test rig for firing a device and generating information relating to the condition of the device based thereon, a data collection unit for determining the condition of the device from the information generated by the firing and storing the information from repeated firings of the device over a period of time and a data handling unit for monitoring a change in performance of the device by comparing the information from stored firings over a period of time for monitoring a change in performance and determining when remedial action is required.

Any means may be employed to transfer the information from the test rig to the data collection unit including (but not limited to) a wire link, a wireless link or a memory stick. The data collection unit may provide a visual and/or audible indication of the condition of the device after each firing. The data collection unit may be configured so that the stored information can be downloaded to the data handling unit such as a computer provided with appropriate software for comparing the information from each firing whereby the change in performance can be monitored. For example, the data handling unit may generate a chart or graph comparing the performance for a number of test firings. Alternatively, the data collection unit and data handling unit may be combined in a single device. Any suitable method of transferring the information from the data collection unit to the data handling unit may be employed including (but not limited to) a wire link, a wireless link or a memory stick.

The data collection unit may be adapted to provide remote communication with a service office via a suitable link. In this way the results of test firings may be remotely monitored whereby any changes in performance of a tool indicating a spares requirement, servicing needs, wear rates etc. can be detected and appropriate action taken before performance of the tool is significantly affected. For example, a global system for mobile communication (GSM) connection to a central service computer equipped with a GSM modem and service software may be employed so that all the data can be collected for processing and/or distribution as required. Alternatively, a general packet radio service (GPRS) connection with an internet web server may be employed so that all the data can be collected and stored on the web server for remote access from the web server from any location for processing and/or distribution as required.

An embodiment of the invention provides a method as defined in claim 1. Optional features of the method are the subject of claims 2 to 6. Another embodiment of the invention provides apparatus as defined in claim 7. Optional features of the apparatus are the subject of claims 8 to 15.

Features of any of the preceding embodiments may be employed separately or in combination with any other embodiment.

The invention will now be described in more detail, by way of example only, with reference to the accompanying drawings in which like reference numerals are used to indicate similar parts, and wherein:-
**FIGURE 1** shows apparatus for testing a device of the kind set forth; and
**FIGURE 2** shows a modification to the device shown in Figure 1.

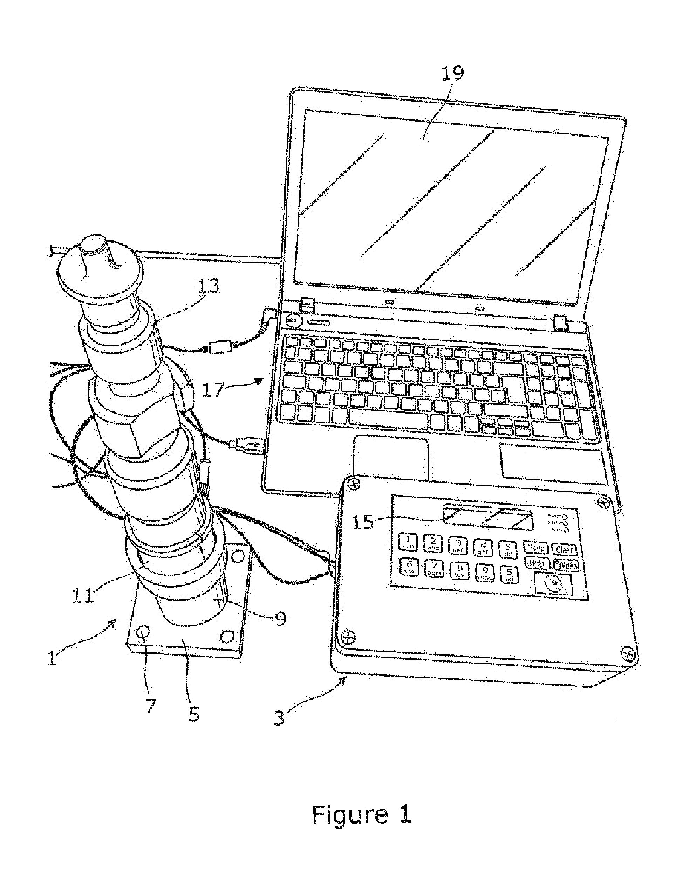

Referring to Figure 1, apparatus for testing a device of the kind set forth is shown. The apparatus includes a test rig 1 and a data collection unit 3.

The test rig 1 includes a rectangular base plate 5 with through holes 7 at the corners by means of which the rig 1 can be secured to a mounting surface by means of screws (not shown). A cylindrical sleeve 9 is upstanding from the base plate 5 and provides a socket opening at the upper end to receive a muzzle adapter 11 for mounting a captive bolt humane slaughter tool 13 (also referred to as a "stunner") for stunning an animal prior to slaughter.

The humane slaughter tool 13 may be of known type in which the bolt is accommodated within and coaxially of a barrel of the humane slaughter tool 13 and is driven lengthwise of the barrel by an explosive force created by firing a blank cartridge in a breach of the humane slaughter tool 13. The construction and operation of such humane slaughter tools 13 is well known to those skilled in the art and is one only described herein in so far as required for an understanding of the operation of the test rig 1 and data collecting unit 3.

The muzzle adapter 11 may be interchangeable and allows the test rig 1 to be used with different models of humane slaughter tools 13 by selection and fitment of the appropriate adapter 11. In a modification (not shown) the test rig 1 may be configured for use with a particular model of humane slaughter tool 13 in which case the muzzle adapter 11 may be dispensed with.

The test rig 1 further includes two magnetic sensors (not shown) set at a measured distance apart in the direction of movement of the captive bolt. A first or uppermost sensor starts a timer and a second or lowermost sensor stops the timer in response to detecting the bolt when the humane slaughter tool 13 is fired.

A microprocessor (not shown) or similar device such as a mini computer is provided that receives the signals from the sensors to start and stop the timer.

The microprocessor is provided with a calibration factor for the sensor delay times and uses this calibration factor to compute the actual travel time between the sensors by subtracting the calibration factor from the sensed travel time. The microprocessor provides a signal representative of the actual travel time as corrected by the calibration factor.

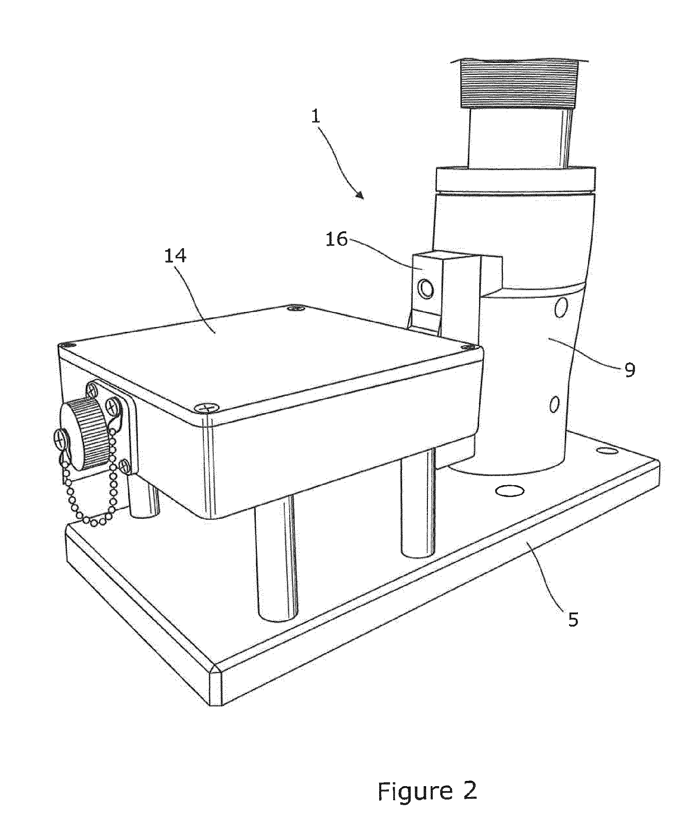

The microprocessor may be incorporated in the data collection unit 3 where, using the actual time for the bolt to travel between the sensors for a test firing of the humane slaughter tool 13, the bolt velocity can be determined for a given spacing of the sensors in the direction of the bolt travel. In a modification shown in Figure 2, the test rig 1 is provided with a calibration unit 14 that includes the microprocessor for converting the sensed travel time between the sensors to the actual travel time and providing a signal representative of the actual travel time to the data collection unit (not shown in Figure 2). A sensor unit 16 is also shown in Figure 2 mounted on the cylindrical sleeve 9 and which includes the magnetic sensors. Any suitable method of transferring the information from the calibration unit 14 to the data collection unit 3 may be employed including (but not limited to a wire link, a wireless link or a memory stick.

The data collection unit 3 compares the computed velocity value with a pre-determined minimum velocity value for the particular model of humane slaughter tool 13 and powerload combination under test and provides a visual indication of whether the computed velocity value is higher or lower than the pre-determined minimum velocity value.

A velocity value higher than the pre-determined minimum velocity value indicates the operation of the humane slaughter tool 13 is satisfactory. A visual and/or audible indication of a pass condition may be generated, for example by illuminating a green light on the unit 3.

A velocity value lower than the predetermined minimum velocity value indicates the operation of the humane slaughter tool 13 is unsatisfactory. A visual and/or audible indication of a fail condition may be generated, for example by illuminating a red light on the unit 3.

A velocity value close to the predetermined minimum velocity value for example up to 5% above the predetermined minimum velocity value indicates the operation of the humane slaughter tool 13 is only marginally satisfactory. A visual and/or audible indication of a borderline pass condition may be generated, for example by illuminating an orange light or by pulsing the green light to warn that the humane slaughter tool 13 is approaching a fail condition and will require repair in the near future.

Alternatively or additionally the unit 3 may include a display 15 for providing a readout of the computed velocity value and/or for providing a read out of the pass/fail condition. The pass condition may be graded from a high level pass condition to a low level or borderline pass condition.

The data collection unit 3 may include a device for example, a memory device to store information relating to each test firing of a particular humane slaughter tool to include (but not limited to) any of the following details:
1) Date and time of test firing
2) Name of operator
3) Tool model as calibre selection
4) Powerload calibre and strength
5) Allocated tool number
6) Computer velocity value
7) Pass or fail condition

The data collection unit 3 may also store information relating to repair/service of a particular humane slaughter tool to include (but not limited to) any of the following details:
1) Date and time of repair/service
2) Name of operator
3) Tool model
4) Allocated tool number
5) Remedial action taken

A list of coded references may be provided for displaying the most common remedial actions for selection and storage in the memory of the unit 3, for example code Al may indicate "recuperate sleeves changed". A general code, for example "other TBA" may be used to cover less common remedial actions that may have been carried out and may require more details to be entered for recall later.

The above information may be entered manually, for example via a user interface on the data collection unit 3 which may include (but is not limited to) a keypad for selecting different functions and/or inputting data. A log-on and password facility may be provided to control input of data to the unit 3 and access to data stored in the unit 3.

The data collection unit 3 may be adapted for downloading information from the memory to a data handling unit 17 such as a computer, for example a personal computer, laptop, palmtop or other similar device. Such data handling unit 17 may be provided with software for processing the information and displaying the information on a screen 19 in any suitable format and/or for providing a print-out of the information via a link to a printer (not shown). Information may be downloaded between the data collection unit 3 and the data handling unit 17 by any suitable means including (but not limited to) a wire link, a wireless link or a memory stick or the like.

The results of several test firings of a particular humane slaughter tool may be displayed and/or printed in the form of a chart or graph whereby the change in performance of the humane slaughter tool 13 over a period of time may be monitored.

A gradual fall in velocity may be used to predict when repair/servicing will be required allowing such work to be scheduled for remedial action at an appropriate time in the future before the performance has deteriorated below a minimum acceptable performance level.

A large fall in velocity may indicate a fault requiring immediate attention to avoid the performance falling below the minimum acceptable performance level during the next period of use.

A large rise in velocity may indicate the wrong powerload has been used for the test firing and/or a different humane slaughter tool has been tested.

The humane slaughter tool may be tested at any appropriate interval of time depending on the frequency of use. For example, humane slaughter tools in regular use on a daily basis when a large number of animals are being stunned during each working day may be tested at the end of each working day while testing at longer intervals of time may be permitted for humane slaughter tools where the use is much lower, for example when only a few animals are being stunned during each working day the humane slaughter tools may be tested weekly, monthly or at any other suitable time interval based on the usage.

The data collection unit may be adapted to provide remote communication with a service office via a suitable link. In this way the results of test firings may be remotely monitored whereby any changes in performance of a tool indicating a spares requirement, servicing needs, wear rates etc. can be detected and appropriate action taken before performance of the tool is significantly affected. For example, a global system for mobile communication (GSM) connection to a central service computer equipped with a GSM modem and service software may be employed so that all the data can be collected for processing and/or distribution as required. Alternatively, a general packet radio service (GPRS) connection with an internet web server may be employed so that all the data can be collected and stored on the web server for remote access from the web server from any location for processing and/or distribution as required.

In a modification (not shown), the test rig 1 may be connected directly to the data handling unit 17 which replaces and performs the same function as the data collection unit 3. In another modification (not shown) the data collection unit 3 and data handling unit 17 may be combined in a single unit and performs the same function as both units.

An embodiment of the invention provides a method of testing the performance of a device of the kind set forth includes providing a test rig, mounting the device on the test rig, firing the device, detecting the time for a captive bolt of the device to travel a pre-determined distance, applying a calibration factor to the detected time to compensate for time delays and determine the actual time to travel the pre-determined distance, and generating a signal representative of the condition of the device based on the actual time.

It may be that the detected time is determined by starting and stopping a timer in response to sensors spaced apart in the direction of travel of the bolt for detecting movement of the bolt. The sensors may be magnetic sensors or any other suitable sensors. It may be that the signal is a visual and/or audible signal for indicating a pass or fail condition of the device.

It may be that the method further includes generating information representative of the condition of the device in response to firing the device, storing the information, repeating the steps of mounting and firing the device over a period of time and storing the information representative of the condition of the device for each firing, and monitoring a change in performance of the device by comparing the information from different firings for determining when remedial action is required.

It may be that the information is stored on the test rig. Alternatively or additionally, the information may be stored on a data collection unit separate from the test rig. The information may be transferred from the test rig to the data collection unit by a wire link, a wireless link or a memory stick. The data collection unit may provide a visual and/or audible indication of the condition of the device after each firing.

It may be that the data collection unit stores information relating to information on each firing of the device and is configured so that the stored information can be downloaded to a data handling unit for comparing the information from each firing whereby a change in performance can be monitored. The data handling unit may generate a chart or graph comparing the performance for a number of test firings. The data collection unit and data handling unit may be combined in a single device. The information may be transferred from the data collection unit to the data handling unit by a wire link, a wireless link or a memory stick. The data collection unit may be adapted to provide remote communication with a service office.

Another embodiment of the invention provides apparatus for testing the performance of a device of the kind set forth, the apparatus including a test rig for detecting the time for a captive bolt of the device to travel a pre-determined distance when the device is connected to the test rig and fired, and a data collection unit for determining the condition of the device based on the actual time to travel the pre-determined distance from the detected time corrected by a calibration factor to compensate for time delays providing an indication of the condition of the device.

It may be that the detected time is determined by starting and stopping a timer in response to sensors spaced apart in the direction of travel of the bolt for detecting movement of the bolt. The sensors may be magnetic sensors or any other suitable sensors. It may be that a pass or fail condition of the device is provided. It may be that a visual and/or audible indication of the condition of the device is provided after each firing.

It may be that the data collection unit stores information from repeated firings of the device over a period of time. The information may be transferred from the test rig to the data collection unit by a wire link, a wireless link or a memory stick. The data collection unit may provide a visual and/or audible indication of the condition of the device after each firing. It may be that the data collection unit stores information relating to information on each firing of the device and is configured so that the stored information can be downloaded to a data handling unit for comparing the information from each firing whereby a change in performance can be monitored. The data handling unit may generate a chart or graph comparing the performance for a number of test firings. The data collection unit and data handling unit may be combined in a single device. The information may be transferred from the data collection unit to the data handling unit by a wire link, a wireless link or a memory stick. The data collection unit may be adapted to provide remote communication with a service office.

Another embodiment of the invention provides a method of testing the performance of a device of the kind set forth includes providing a test rig, mounting the device on the test rig, firing the device, generating information representative of the condition of the device based thereon, storing the information, repeating the steps of mounting and firing the device over a period of time and storing the information representative of the condition of the device for each firing, and monitoring a change in performance of the device by comparing the information from different firings for determining when remedial action is required.

It may be that the information is stored on the test rig. Alternatively or additionally, the information may be stored on a data collection unit separate from the test rig. The information may be transferred from the test rig to the data collection unit by a wire link, a wireless link or a memory stick. It may be that a pass or fail condition of the device is provided. It may be that a visual and/or audible indication of the condition of the device is provided after each firing.

It may be that the data collection unit stores information relating to information on each firing of the device and is configured so that the stored information can be downloaded to a data handling unit for comparing the information from each firing whereby a change in performance can be monitored. The data handling unit may generate a chart or graph comparing the performance for a number of test firings. The data collection unit and data handling unit may be combined in a single device. The information may be transferred from the data collection unit to the data handling unit by a wire link, a wireless link or a memory stick. The data collection unit may be adapted to provide remote communication with a service office.

Another embodiment of the invention provides apparatus for testing the performance of a device of the kind set forth includes a test rig for firing a device and generating information relating to the condition of the device based thereon, a data collection unit for determining the condition of the device from the information generated by the firing and storing the information from repeated firings of the device over a period of time and a data handling unit for monitoring a change in performance of the device by comparing the information from stored firings over a period of time for monitoring a change in performance and determining when remedial action is required.

It may be that the information is transferred from the test rig to the data collection unit by a wire link, a wireless link or a memory stick. It may be that a pass or fail condition of the device is provided. It may be that a visual and/or audible indication of the condition of the device is provided after each firing. The data collection unit may be configured so that the stored information can be downloaded to the data handling unit for comparing the information from each firing whereby the change in performance can be monitored. The data handling unit may generate a chart or graph comparing the performance for a number of test firings. The data collection unit and data handling unit may be combined in a single device. The information may be transferred from the data collection unit to the data handling unit by a wire link, a wireless link or a memory stick. The data collection unit may be adapted to provide remote communication with a service office.

The invention is not limited to the exemplary embodiments described herein and modifications falling within the scope of the invention may be made as will be apparent to those skilled in the art. For example while in the exemplary embodiment the captive bolt of the humane slaughter tool is driven by the explosive force generated when a blank cartridge is fired, the invention has application to other types of humane slaughter tool including, for example, tools in which the captive bolt is driven by gas pressure or by any other suitable power generator such as a spring unit. Any feature described herein may be employed separately or in combination with any other feature for carrying out a method of testing or in apparatus for testing a device of the kind set forth and the invention extends to and includes all such features individually and in any combination or sub-combination.

## Claims

1. A method of testing the performance of a device of the kind set forth includes providing a test rig, mounting the device on the test rig, firing the device, detecting the time for a captive bolt of the device to travel a pre-determined distance, applying a calibration factor to the detected time to compensate for time delays and determine the actual time to travel the pre-determined distance, and generating a signal representative of the condition of the device based on the actual time.

2. The method of claim 1 wherein the detected time is determined by starting and stopping a timer in response to sensors spaced apart in the direction of travel of the bolt for detecting movement of the bolt.

3. The method of claim 2 wherein the sensors are magnetic sensors.

4. The method of any preceding claim wherein the signal is at least one of a visual signal and an audible signal for indicating a pass or fail condition of the device.

5. The method of any preceding claim further including generating information representative of the condition of the device in response to firing the device, storing the information, repeating the steps of mounting and firing the device over a period of time and storing the information representative of the condition of the device for each firing, and monitoring a change in performance of the device by comparing the information from different firings for determining when remedial action is required.

6. The method of claim 5 further including providing at least one of a visual indication and an audible indication of the condition of the device after each firing.

7. Apparatus for testing the performance of a device of the kind set forth includes a test rig for detecting the time for a captive bolt of the device to travel a pre-determined distance when the device is connected to the test rig and fired, and a data collection unit for determining the condition of the device based on the actual time to travel the pre-determined distance from the detected time corrected by a calibration factor to compensate for time delays providing an indication of the condition of the device.

8. Apparatus according to claim 7 wherein the detected time is determined by starting and stopping a timer in response to sensors spaced apart in the direction of travel of the bolt for detecting movement of the bolt.

9. Apparatus according to claim 8 wherein the sensors are magnetic sensors.

10. Apparatus according to any of claims 7 to 9 wherein a pass or fail condition of the device is provided.

11. Apparatus according to any of claims 7 to 10 wherein at least one of a visual indication and an audible indication of the condition of the device is provided after each firing.

12. Apparatus according to any of claims 7 to 11 wherein the data collection unit is configured for storing information from repeated firings of the device over a period of time.

13. Apparatus according to any of claims 7 to 12 wherein information is transferred from the test rig to the data collection unit by a wire link, a wireless link or a memory stick.

14. Apparatus according to any of claims 7 to 13 wherein the data collection unit stores information relating to information on each firing of the device and is configured so that the stored information can be downloaded to a data handling unit for comparing the information from each firing whereby a change in performance can be monitored.

15. Apparatus according to claim 14 wherein the data handling unit generates a chart or graph comparing the performance for a number of test firings.
